# FASCICULE DE BREVET EUROPEEN

(11) **EP 2 993 113 B1**
(45) Date de publication et mention de la délivrance du brevet: **04.10.2017**
(21) Numéro de dépôt: 15179203.3
(22) Date de dépôt: 30.07.2015
(51) Int. Cl.: B62D 33/02, B62D 33/037

(54) **POUTRE POUR PLANCHER RÉGLABLE EN HAUTEUR, ET OUTIL CORRESPONDANT**
HÖHENVERSTELLBARER DECKENBALKEN, UND ENTSPRECHENDES WERKZEUG
BEAM FOR HEIGHT-ADJUSTABLE FLOOR, AND CORRESPONDING TOOL

(30) Priorité: 04.09.2014 FR 1458312
(43) Date de publication de la demande: 09.03.2016
(73) Titulaire: Ack Forankra, 69780 Mions (FR)
(72) Inventeur: BIAUD, Richard, 69800 Saint-Priest (FR); RAISON, Romain, 69007 Lyon (FR)
(74) Mandataire: Vidon Brevets & Stratégie

(56) Documents cités:
- EP-A1- 0 557 215
- EP-A1- 2 039 594
- EP-A1- 2 100 801
- FR-A1- 2 667 283
- FR-A1- 2 774 353

## Description

### 1. Domaine de l'invention

Le domaine de l'invention est celui de l'aménagement des volumes de transport des véhicules utilitaires et des camions. Plus précisément, l'invention concerne les poutres réglables en hauteur, utilisées pour maintenir un plancher intermédiaire dans une semi-remorque.

### 2. Arrière-plan technologique

Pour faciliter et optimiser le transport de marchandises, notamment dans le cas de marchandises non empilables, des systèmes de chargement à deux étages, ou à double plancher, ont été proposés. Ils permettent d'éviter l'utilisation d'un second véhicule, en optimisant l'utilisation du volume disponible.

Un tel système de chargement à deux étages met en oeuvre un plancher intermédiaire soutenu par des poutres qui peuvent par exemple être déplacées verticalement dans des rails à alvéoles prévus sur les parois d'une semi-remorque. Ceci permet notamment un réglage en hauteur du plancher intermédiaire, en fonction des besoins, et un escamotage de la poutre en partie supérieure de la semi-remorque, lorsqu'elle n'est pas utilisée.

Selon une technique connue, une telle poutre est composée d'un corps de poutre, dans lequel coulisse un insert maintenu par un rivet, une vis ou une tige solidaire du corps de poutre et mobile dans une lumière formée sur l'insert. Une tête pivotante, fixée à l'extrémité de l'insert, présente une extrémité en tenon destinée à s'adapter dans un rail prévu à cet effet dans la structure de la semi-remorque. Ce rail présente une série d'alvéoles, aptes à coopérer chacune avec la tête, pour permettre un réglage en hauteur précis de la poutre.

Un système de verrouillage disposé dans la tête et comprenant généralement un loquet et un ressort de rappel, permet à la poutre d'être immobilisée dans l'alvéole du rail correspondant à la hauteur désirée pour le réglage du plancher intermédiaire.

Le loquet est poussé vers le rail sous l'influence du ressort, permettant ainsi le verrouillage de la position de la poutre dans une alvéole. Lorsque la poutre coulisse vers le haut du rail alvéolé, le tenon de la tête y est guidé, et le loquet pénètre dans chaque alvéole franchie, puis s'en extrait. En revanche, le profil du loquet empêche que la poutre puisse coulisser vers le bas du rail, à moins d'être mise en position déverrouillée par le retrait du loquet de l'alvéole dans lequel il est immobilisé.

Ces systèmes de verrouillage ont l'inconvénient d'être très bruyants, du fait des chocs successifs du loquet contre les alvéoles du rail. En effet, lors du déplacement de la poutre, le loquet est constamment orienté vers le rail par le ressort de rappel : de fait, l'extrémité du loquet heurte les bords de chacune des alvéoles franchies. Sur le long terme, ces nuisances sonores peuvent dégrader les conditions de travail des opérateurs en charge de la mise en place des marchandises, voire entraîner des maux de tête, ou des troubles de l'audition. Par ailleurs, les chargements/déchargements ayant parfois lieu dans des zones habitées, et dans certains cas la nuit, il est souhaitable de réduire au maximum toute gêne sonore pour l'environnement immédiat.

Ce genre de système de verrouillage est également peu aisé à manipuler. L'opérateur doit parfois exercer un effort important afin de déplacer la poutre verticalement, en particulier à cause de la friction qui existe entre la tête de la poutre et le rail, généralement réalisés en aluminium. Dans certains cas, des blocages peuvent apparaître, notamment lorsque le loquet est détérioré. Une poutre pour plancher en accord avec le préambule de la revendication 1 est décrite dans le document EP-A-2039594.

### 3. Objectifs de l'invention

La présente invention vise notamment à pallier au moins certains de ces problèmes, en proposant un concept de poutre pour plancher réglable en hauteur, mettant en oeuvre un système de verrouillage innovant.

### 4. Exposé de l'invention

A cet effet, l'invention concerne une poutre pour plancher réglable en hauteur d'une semi-remorque, comprenant une tête de liaison avec un rail prévu à cet effet sur ladite semi-remorque, présentant une série d'alvéoles correspondant à des positions distinctes pour ledit rail, ladite tête étant montée mobile en rotation sur un insert coulissant par rapport à un corps de poutre, et portant un sabot apte à coulisser dans ledit rail et un loquet pouvant prendre deux positions :
- une position verrouillée, dans laquelle il est engagé dans une desdites alvéoles, pour maintenir ladite poutre immobile par rapport audit rail ; et
- une position déverrouillée, dans laquelle il est extrait de ladite alvéole.

Selon un aspect de l'invention, ladite tête comprend des moyens de maintien, maintenant ledit loquet dans une position intermédiaire stable, entre ladite position verrouillée et ladite position déverrouillée, dans laquelle il est partiellement engagé dans l'une des alvéoles, ces moyens de maintien comprenant un premier ressort de rappel, tendant à ramener ledit loquet dans ladite position verrouillée, et un second ressort de rappel, s'opposant audit premier ressort de rappel, pour maintenir ledit loquet dans ladite position intermédiaire, ledit loquet étant monté pivotant par rapport à ladite tête. Cette position intermédiaire permet que la poutre soit déplacée vers une hauteur voulue, sans que le loquet soit constamment intégralement inséré dans les alvéoles au cours du coulissement. Dans cette position intermédiaire, le loquet est cependant partiellement engagé dans chaque alvéole transmise, assurant un maintien temporaire suffisant, pour des raisons de sécurité et de confort: la position intermédiaire n'est pas la position déverrouillée, dans laquelle le loquet est intégralement extrait de l'alvéole.

Les chocs entre l'extrémité du loquet et les alvéoles sont ainsi réduits, ce qui permet notamment au système de verrouillage d'être moins bruyant. On augmente en conséquence l'efficacité et le confort de l'opérateur, sans nuire à la sécurité.

Le second ressort de rappel peut agir notamment sur une pièce de maintien dans la position intermédiaire présentant un pion, venant en contact avec ladite tête.

Selon un mode de réalisation particulier, ladite pièce de maintien dans la position intermédiaire présente un épaulement venant en contact avec le loquet.

Selon cette approche, le premier ressort de rappel exerce une force sur l'extrémité supérieure du loquet, par opposition au second ressort de rappel qui exerce une force sur une extrémité inférieure du loquet, par l'intermédiaire de l'épaulement.

Selon un mode de réalisation particulier, le passage de ladite position intermédiaire vers ladite position verrouillée est assuré par le poids de ladite poutre et/ou le chargement du plancher supporté par ladite poutre.

Ainsi, l'immobilisation de la poutre des poutres est automatique, il n'est pas nécessaire que l'opérateur intervienne. L'absence d'action nécessaire pour le verrouillage garantit la sécurité du chargement et de l'opérateur.

Selon un mode de réalisation particulier, le passage de ladite position intermédiaire vers ladite position verrouillée entraîne la compression dudit second ressort de rappel.

Une partie des forces exercées par le chargement se cumule avec les forces exercées par le premier ressort de rappel sur l'extrémité haute du loquet, surpassant alors les forces exercées par le second ressort sur la partie inférieure du loquet.

Selon un mode de réalisation particulier, le sabot est réalisé par exemple en polyamide, POM ou téflon.

Ceci permet un coulissement facilité et plus silencieux de la poutre, favorisé par la réduction du frottement entre la tête et le rail. Le système est également préservé de dégradations importantes dues à l'usure de la tête et les coûts de maintenance sont réduits.

Le changement des pièces plastiques, lorsqu'il est nécessaire, est moins onéreux que le changement de l'intégralité d'une tête de poutre détériorée.

Selon un mode de réalisation particulier, ledit sabot comporte au moins deux portions emboîtables l'une avec l'autre.

Ceci permet de faciliter la maintenance.

Selon un autre aspect particulier, ladite tête peut recevoir au moins deux sabots distincts, présentant des profils différents complémentaires d'au moins deux profils de rail différents.

Ainsi, l'invention peut s'adapter à des types de rails distincts, comme les rails plats directement encastrés dans les parois d'une semi-remorque, ou encore les rails bombés appliqués vissés sur les parois d'une semi-remorque. Ceci permet à la poutre d'être facilement utilisable par des transporteurs possédant différents types de semi-remorques, et de faciliter la gestion des stocks de poutres.

Selon un mode de réalisation particulier, le loquet présente un élément d'accrochage, apte à coopérer avec une portion correspondante d'un outil, de façon à actionner à distance un déverrouillage.

Ainsi, l'opérateur peut aisément faire coulisser les poutres vers le bas même si elles sont immobilisées dans une position verrouillée haute.

Selon un autre aspect de l'invention, l'invention concerne un outil destiné à être utilisé pour régler la hauteur d'une poutre telle que décrite, coulissant dans un rail. Cet outil peut présenter une portion en tenon apte à être guidée dans ledit rail, et un élément en saillie apte à actionner le déverrouillage d'un loquet de ladite poutre. Cet outil est monté sur une perche.

Un tel outil permet de faciliter la manipulation des poutres lorsque l'opérateur ne peut pas aisément atteindre le loquet. Il est particulièrement utile dans le cas où l'opérateur ne distingue pas bien le loquet qu'il doit actionner pour le déverrouillage (chargement/déchargement de nuit, poutres en fond de semi-remorque, ...).

### 5. Liste des figures

D'autres caractéristiques et avantages de l'invention apparaîtront à la lecture de la description suivante, donnée à titre d'exemple indicatif et non limitatif, et des dessins annexés, dans lesquels :
- la figure 1 présente une vue de la tête de la poutre ;
- la **figure 2** est une vue éclatée de la poutre et des éléments de sa tête ;
- les **figures 3A et 3B** sont des vues en coupe de l'extrémité de la poutre représentant notamment le sabot utilisé avec différents types de rails :

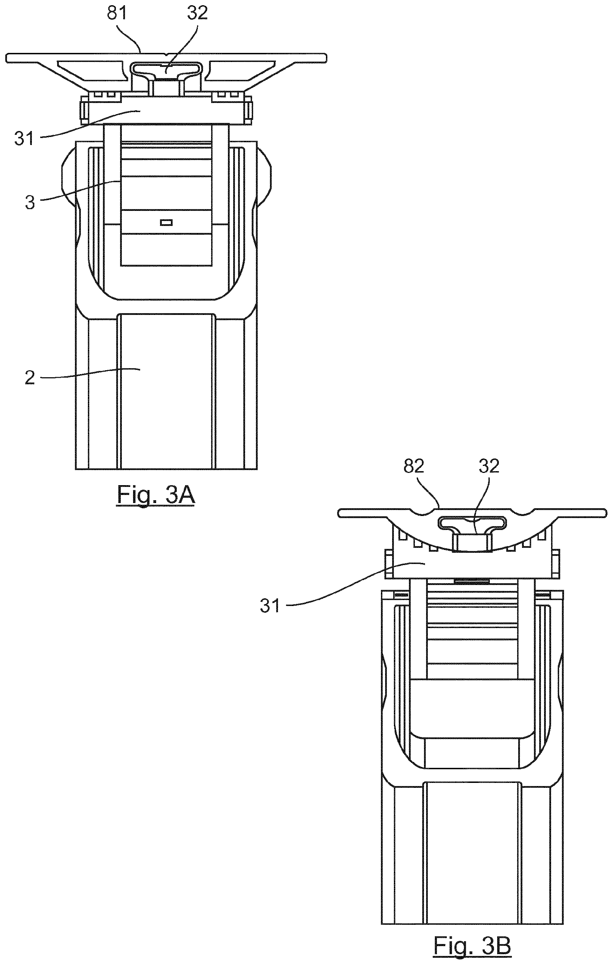

   - **figure 3A** **:** sabot adapté à un rail plat;
   - **figure 3B** **:** sabot adapté à un rail bombé ;

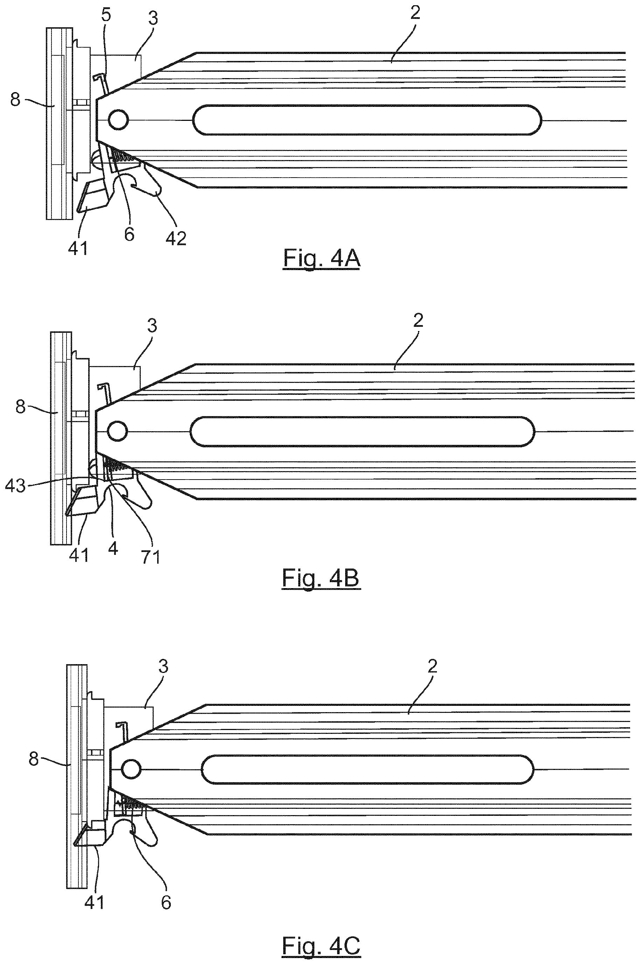

- les **figures 4A à 4C** représentent les trois positions stables pouvant être prises par le loquet :
   - **figure 4A** **:** position déverrouillée (par action manuelle ou grâce à un outil adapté) ;
   - **figure 4B** **:** position intermédiaire ;
   - **figure 4C** **:** position verrouillée, ou « en charge » ;

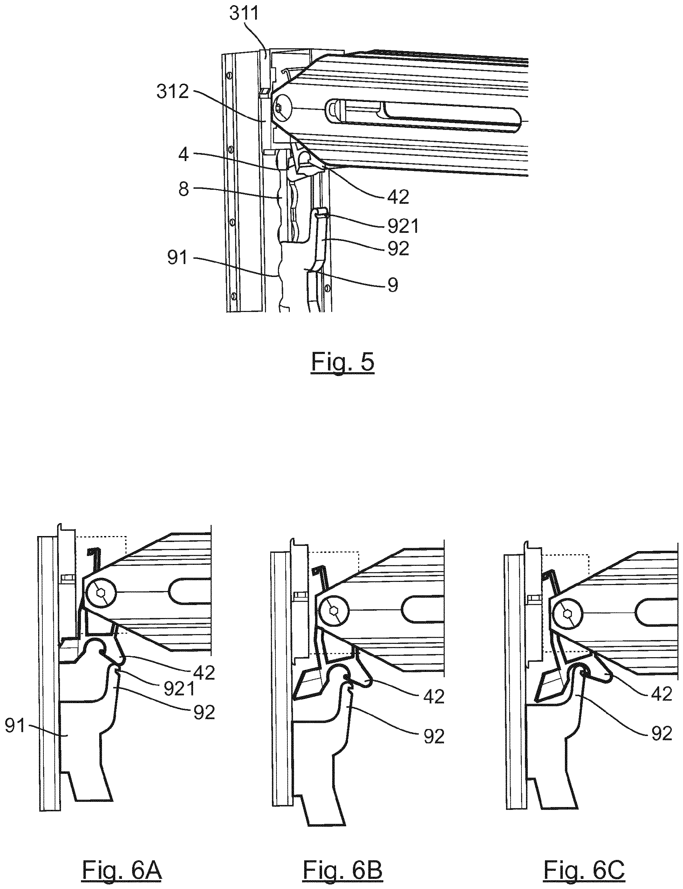

- la **figure 5A** présente une vue 3D de l'outil de déverrouillage du loquet ;
- les **figures 6A à 6C** illustrent les trois phases correspondant à une opération de déverrouillage du loquet par l'outil :
   - **figure 6A** **:** phase d'approche du loquet ;
   - **figure 6B** **:** phase de déverrouillage du loquet ;
   - **figure 6C** **:** phase de coopération de l'outil avec l'élément d'accrochage du loquet.

### 6. Description détaillée

### 6.1 Principe général

L'invention propose une nouvelle approche pour le réglage en hauteur des poutres de plancher utilisées dans les semi-remorques. Plus précisément, l'invention concerne une poutre, comprenant une tête pivotante portant un sabot apte à coulisser par rapport à un rail à alvéoles et un loquet.

Contrairement aux solutions de l'art antérieur, le loquet peut prendre non pas deux mais trois positions :
- une position verrouillée (connue), dans laquelle il est engagé dans une des alvéoles pour maintenir la poutre immobile par rapport au rail ;
- une position déverrouillée (connue), dans laquelle il est extrait de l'alvéole ; et
- une position intermédiaire stable (nouvelle), dans laquelle il n'est que partiellement engagé dans une des alvéoles.

Cette position intermédiaire stable est atteinte grâce à des moyens de maintien spécifiques situés dans la tête, comprenant notamment, dans le mode de réalisation décrit par la suite, un premier et un second ressort de rappel, et évite au loquet de pénétrer intégralement dans les alvéoles (c'est-à-dire de la même façon que dans la position verrouillée) et de heurter fortement et bruyamment le bord des alvéoles lorsque la poutre est déplacée verticalement.

### 6.2 Description d'un mode de réalisation de l'invention

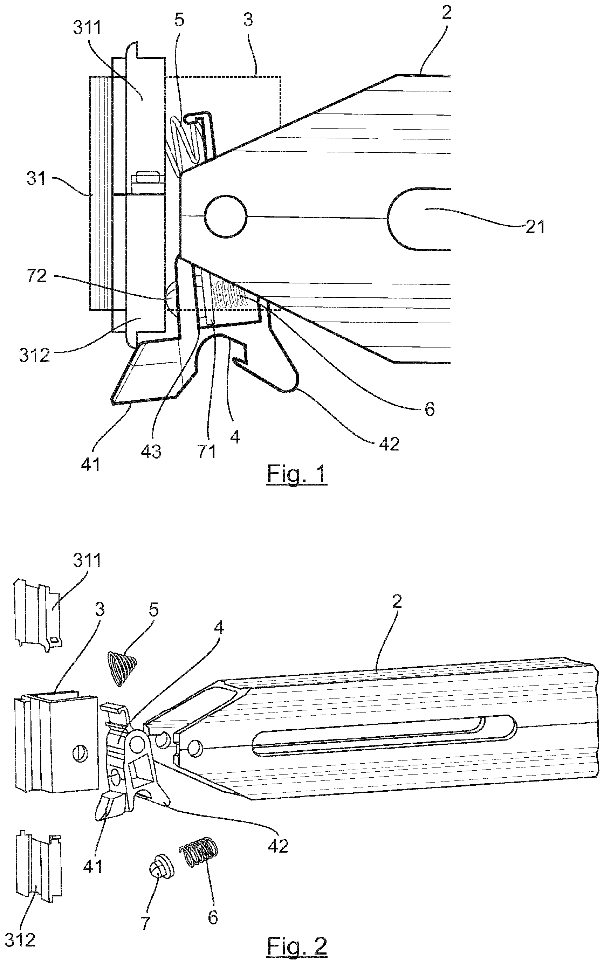

Les **figures 1 et 2** illustrent une extrémité d'une poutre pour plancher réglable en hauteur, mise en oeuvre en particulier dans une semi-remorque dans le cas de transport de marchandises non directement empilables.

Une telle poutre comprend une tête **3** montée mobile en rotation sur un insert **2** coulissant par rapport au corps de la poutre (non représenté). L'insert **2** présente deux lumières oblongues **21,** permettant la solidarisation et le coulissement par rapport au corps de poutre.

La tête **3,** réalisée par exemple en aluminium, porte un sabot **31** apte à coopérer avec un rail **4,** par ailleurs muni d'une série d'alvéoles. Ce sabot **31** est, dans ce mode de réalisation, constitué de deux portions **311, 312** est assemblé sur la structure de la tête **3,** tel que représenté sur la **figure 2****.** Cette réalisation en deux portions permet de faciliter la maintenance, et le remplacement du sabot lorsque celui-ci est usé ou détérioré.

Ce sabot **31** peut être par exemple réalisé en polyamide, en POM (polyoxyméthylène) ou en téflon, pour faciliter le glissement et réduire le bruit.

Des sabots **31** présentant des profils différents peuvent être prévus pour être montés sur la tête **3,** afin de s'adapter à différents types de rails. La **figure 3A** présente ainsi, à titre d'exemple, un sabot **31** à profil plan destiné à coulisser sur un rail plat **81,** du type des rails aménagés dans les parois d'une semi-remorque par encastrement. La **figure 3B** présente quant à elle un autre exemple, à savoir un sabot **31** possédant un profil concave, complémentaire d'un rail bombé **82,** du type des rails appliqués sur les parois d'une semi-remorque par vissage. Les deux portions emboîtables l'une avec l'autre **311** et **312** constituant le sabot **31** et assemblées sur la tête **3** peuvent facilement être remplacées en cas d'usure ou de détérioration, ou pour s'adapter au type de rail.

Un loquet **4** est monté pivotant par rapport à l'insert **2,** à l'intérieur de la tête **3.**

Un premier ressort de rappel **5** et un second ressort de rappel **6** sont arrangés entre le loquet **4** et le fond de la tête **3** le premier ressort **5** agissant sur la partie du loquet située au dessus de l'axe de rotation du loquet, le second ressort **6** agissant sur la partie du loquet située en dessous de l'axe de rotation. Le second ressort de rappel **6** est monté sur une pièce **7** de maintien dans la position intermédiaire, portant un pion **72,** venant en contact avec la tête **3.** La pièce **7** présente un épaulement **71** venant en butée sur une surface d'appui **43** du loquet **4,** le maintenant dans une position intermédiaire, dans laquelle l'extrémité **41** du loquet reste partiellement introduite dans une alvéole du rail.

Les **figures 4A, 4B, et 4C** illustrent les trois positions que peut prendre le loquet **4** au cours du réglage en hauteur d'une poutre, grâce à ces deux ressorts, par rapport à un rail alvéolé **8** aménagé dans les parois d'une semi-remorque.

La poutre est initialement mise en place dans la semi-remorque par insertion de la tête **3** dans une portion basse du rail **8** ne comportant pas d'alvéoles. Un opérateur fait coulisser la poutre vers le haut, jusqu'à atteindre les premières alvéoles du rail **8,** puis la hauteur voulue.

Au cours de ce déplacement en coulissement vers le haut, l'extrémité **41** du loquet **4** se trouve au moins partiellement hors des alvéoles, dans une position intermédiaire, comme représenté sur la **figure 4B****.** Dans cette configuration, le premier ressort de rappel 5 est comprimé alors que le second ressort de rappel **6** est déployé, le pion **7** venant en appui contre le sabot.

Une fois que la poutre a été placée à la hauteur désirée, l'opérateur relâche son action sur l'élément d'accrochage **42.** Le loquet **4** reste alors partiellement engagé dans l'alvéole du rail, dans la position intermédiaire, comme représenté sur la **figure 4B****.** Cette position du loquet **4** est rendue possible par la combinaison des moyens de maintien comprenant le premier ressort de rappel **5** et le second ressort de rappel **6.**

Plus précisément, le premier ressort de rappel **5,** disposé au dessus de l'axe de rotation du loquet, exerce une force tendant à ramener le loquet **4** vers le rail **8** (c'est-à-dire vers la position verrouillée), pendant que le second ressort de rappel **6**, disposé au dessous de l'axe de rotation du loquet, exerce via le pion **72** une force opposée, tendant à éloigner le loquet **4** du rail **8.** L'intensité de la force appliquée par le premier ressort **5** est supérieure à celle appliquée par le second ressort **6**. Le maintien dans cette position intermédiaire est assuré par l'épaulement **71** de la pièce **7,** qui vient en butée sur le loquet **4,** et plus précisément sur une surface d'appui **43** de celui-ci, maintenant le loquet dans une position intermédiaire stable. Cette position intermédiaire permet que l'extrémité **41** du loquet, servant à l'immobilisation de la poutre dans le rail, ne pénètre pas intégralement dans les alvéoles du rail au cours du déplacement. Ainsi, l'opérateur n'est pas gêné par le bruit fort des chocs successifs, et le loquet est préservé de dégradations trop importantes. Par ailleurs, même si le loquet n'est pas complètement inséré dans les alvéoles, la poutre est stabilisée, et donc sécurisée, à chaque alvéole intermédiaire.

Le poids de la poutre, et/ou le cas échéant le chargement du plancher qui est placé par dessus, agissant sur la tête **3,** suffisent à faire passer le loquet **4** de cette position intermédiaire à la position verrouillée comme présentée sur la **figure 4C****,** sans autre manipulation. En effet, sous l'action d'une partie des forces exercées par la poutre et/ou le chargement, le deuxième ressort de rappel **6** se comprime, par l'intermédiaire de la pièce **7,** permettant l'introduction complète de l'extrémité de verrouillage **41** du loquet dans l'alvéole du rail **8.**

Lorsque la poutre doit être à nouveau déplacée, dans le cas d'un ajustement de la hauteur du plancher ou du rangement des poutres (généralement en partie supérieure de la remorque), le loquet est placé dans une position déverrouillée par l'opérateur, comme illustré sur la **figure 4A****.**

On dispose ainsi d'un système efficace et peu bruyant. Le déplacement vers le haut est possible dans la position intermédiaire (**figure 4B**), sans bruit important. Le verrouillage complet (**figure 4C**) se fait sans action de l'utilisateur, sous l'action du poids de l'ensemble. Un déverrouillage complet (**figure 4A**) permet de déplacer la poutre vers le bas.

Selon un mode de réalisation particulier, ce déverrouillage peut être actionné à distance par l'opérateur, notamment lorsque la poutre est dans une position élevée. Pour cela, le loquet **4** présente un élément d'accrochage **42** pouvant coopérer avec une portion complémentaire d'un outil **9.**

Cet outil **9,** représenté sur la **figure 5****,** comporte sur un de ses côtés une portion en tenon **91,** prévue pour coopérer avec le rail **8,** et un élément en saillie **92** muni d'une encoche **921.** L'opérateur fait coulisser l'outil **9** dans le rail alvéolé **8** par l'intermédiaire de la portion en tenon **91,** jusqu'à parvenir au contact du loquet **4** (**figure 6A**).

Dans un mode de réalisation particulier, cet outil est monté sur une perche facilitant les opérations de déplacement des poutres, y compris lorsque celles-ci se trouvent en hauteur.

Le guidage de l'outil **9** dans le rail **8** assure un bon placement de l'élément en saillie **92** par rapport à l'élément d'accrochage **42** du loquet **4,** ce qui est notamment utile dans certaines conditions de chargement ou déchargement dans lesquelles l'opérateur ne distingue pas bien le loquet, comme c'est le cas de nuit, ou lorsque les poutres sont situées dans l'obscurité du fond de la semi-remorque.

Lorsque l'outil **9** exerce une pression sur le loquet **4,** la forme inclinée de l'élément d'accrochage **42** entraîne le retrait du loquet **4** de l'alvéole dans laquelle il était verrouillé, comme illustré par la **figure 6B**. L'encoche **921** de l'outil **9** se solidarise ensuite avec cet élément d'accrochage **42,** ce qui permet à l'opérateur de faire coulisser la poutre, en agissant sur la perche. Un mouvement de rotation appliqué à l'outil permet de le désolidariser du loquet, puis de le dégager du rail.

## Revendications

1. Poutre pour plancher réglable en hauteur d'une semi-remorque, comprenant une tête (3) de liaison avec un rail (8) prévu à cet effet sur ladite semi-remorque, présentant une série d'alvéoles correspondant à des positions distinctes pour ledit rail, ladite tête (3) étant montée mobile en rotation sur un insert (2) coulissant par rapport à un corps de poutre, et portant un sabot (31) apte à coulisser dans ledit rail et un loquet (4) pouvant prendre deux positions :
- une position verrouillée, dans laquelle il est engagé dans une desdites alvéoles, pour maintenir ladite poutre immobile par rapport audit rail (8) ; et
- une position déverrouillée, dans laquelle il est extrait de ladite alvéole,
**caractérisée en ce que** ladite tête (3) comprend des moyens de maintien, maintenant ledit loquet (4) dans une position intermédiaire stable, entre ladite position verrouillée et ladite position déverrouillée, lorsque ledit sabot (31) coopère avec ledit rail (8), position intermédiaire dans laquelle ledit loquet (4) est partiellement engagé dans une des alvéoles, lesdits moyens de maintien comprenant un premier ressort de rappel (5), tendant à ramener ledit loquet (4) dans ladite position verrouillée, et un second ressort de rappel (6), s'opposant audit premier ressort de rappel (5), pour maintenir ledit loquet (4) dans ladite position intermédiaire, ledit loquet (4) étant monté pivotant par rapport à ladite tête (3).

2. Poutre selon la revendication 1, **caractérisée en ce que** ledit second ressort de rappel (6) agit sur une pièce (7) de maintien dans la position intermédiaire présentant un pion (72), venant en contact avec ladite tête (3).

3. Poutre selon la revendication 2, **caractérisé en ce que** ladite pièce (7) présente un épaulement (71) venant en contact avec ledit loquet (4).

4. Poutre selon l'une quelconque des revendications 1 à 3, **caractérisée en ce que** le passage de ladite position intermédiaire vers ladite position verrouillée est assuré par le poids de ladite poutre et/ou le chargement du plancher supporté par ladite poutre.

5. Poutre selon les revendications 2 et 4, **caractérisée en ce que** le passage de ladite position intermédiaire vers ladite position verrouillée entraîne la compression dudit second ressort de rappel (6).

6. Poutre selon l'une quelconque des revendications 1 à 5, **caractérisée en ce que** ledit sabot (31) est réalisé en polyamide, POM ou téflon.

7. Poutre selon la revendication 6, **caractérisée en ce que** ledit sabot (31) comporte au moins deux portions (311, 312) emboîtables l'une avec l'autre.

8. Poutre selon l'une quelconque des revendications 6 et 7, **caractérisé en ce que en ce que** ladite tête peut recevoir au moins deux sabots (31) distincts, présentant des profils différents complémentaires d'au moins deux profils de rail (8) différents.

9. Poutre selon l'une quelconque des revendications 1 à 8, **caractérisée en ce que** ledit loquet (4) présente un élément d'accrochage (42), apte à coopérer avec une portion correspondante d'un outil, de façon à actionner à distance un déverrouillage.

10. Outil (9) destiné à être utilisé pour régler la hauteur d'une poutre selon l'une quelconque des revendications 1 à 9, coulissant dans un rail (8),
**caractérisé en ce qu'**il présente une portion en tenon (91) apte à être guidée dans ledit rail alvéolé et un élément en saillie (92) apte à actionner le déverrouillage d'un loquet (4) monté pivotant par rapport à la tête (3) de ladite poutre, et **en ce qu'**il est monté sur une perche.

## Patentansprüche

1. Balken für höhenverstellbaren Boden eines Sattelanhängers, umfassend einen Kopf (3) zum Verbinden mit einer Schiene (8), die zu diesem Zweck an dem Sattelanhänger vorgesehen ist, der eine Reihe von Kullen aufweist, die verschiedenen Positionen für die Schiene entsprechen, wobei der Kopf (3) drehbeweglich auf einem Einsatz (2) befestigt ist, der in Bezug auf einen Balkenkörper gleitet, und ein Gleitstück (31), das geeignet ist, in der Schiene zu gleiten, und einen Schnappverschluss (4) trägt, der zwei Positionen einnehmen kann:
- eine verriegelte Position, in der er mit einer der Kullen in Eingriff steht, um den Balken gegenüber der Schiene (8) unbeweglich zu halten, und
- eine entriegelte Position, in der er aus der Kulle herausgezogen ist,
**dadurch gekennzeichnet, dass** der Kopf (3) Haltemittel aufweist, die den Schnappverschluss (4) in einer stabilen Zwischenposition zwischen der verriegelten Position und der entriegelten Position halten, wenn das Gleitstück (31) mit der Schiene (8) zusammenwirkt, wobei der Schnappverschluss (4) in der Zwischenposition teilweise mit einer der Kullen in Eingriff steht, wobei die Haltemittel eine erste Rückstellfeder (5), die dazu neigt, den Schnappverschluss (4) in die verriegelte Position zurückzubringen, und eine zweite Rückstellfeder (6) aufweisen, die der ersten Rückstellfeder (5) entgegengesetzt ist, um den Schnappverschluss (4) in der Zwischenposition zu halten, wobei die Klinke (4) schwenkbar in Bezug auf den Kopf (3) befestigt ist.

2. Balken nach Anspruch 1, **dadurch gekennzeichnet, dass** die zweite Rückstellfeder (6) auf ein Stück (7) zum Halten in der Zwischenposition einwirkt, das einen Stift (72) aufweist, der in Kontakt mit dem Kopf (3) kommt.

3. Balken nach Anspruch 2, **dadurch gekennzeichnet, dass** das Stück (7) eine Schulter (71) aufweist, die in Kontakt mit dem Schnappverschluss (4) kommt.

4. Balken nach einem der Ansprüche 1 bis 3, **dadurch gekennzeichnet, dass** das Übergehen von der Zwischenposition zu der verriegelten Position durch das Gewicht des Balkens und/oder die Last des Bodens, der von dem Balken getragen wird, gewährleistet.

5. Balken nach einem der Ansprüche 2 und 4, **dadurch gekennzeichnet, dass** das Übergehen von der Zwischenposition zu der verriegelten Position die Komprimierung der zweiten Rückstellfeder (6) bewirkt.

6. Balken nach einem der Ansprüche 1 bis 5, **dadurch gekennzeichnet, dass** das Gleitstück (31) aus Polyamid, POM oder Teflon hergestellt ist.

7. Balken nach Anspruch 6, **dadurch gekennzeichnet, dass** das Gleitstück (31) mindestens zwei Abschnitte (311, 312) aufweist, die ineinander zusammensteckbar sind.

8. Balken nach einem der Ansprüche 6 und 7, **dadurch gekennzeichnet, dass** der Kopf mindestens zwei separate Gleitstücke (31) aufnehmen kann, die verschiedene Profile aufweisen, die komplementär zu mindestens zwei verschiedenen Schienenprofilen (8) sind.

9. Balken nach einem der Ansprüche 1 bis 8, **dadurch gekennzeichnet, dass** der Schnappverschluss (4) ein Einhakelement (42) aufweist, das geeignet ist, mit einem entsprechenden Abschnitt eines Werkzeugs derart zusammenzuwirken, um ein Entriegeln aus der Ferne zu betätigen.

10. Werkzeug (9), das dazu bestimmt ist, verwendet zu werden, um die Höhe eines Balkens nach einem der Ansprüche 1 bis 9 einzustellen, der in einer Schiene (8) gleitet,
**dadurch gekennzeichnet, dass** es einen Zapfenabschnitt (91), der geeignet ist, in der mit Kullen versehenen Schiene geführt zu werden, und ein vorstehendes Element (92) aufweist, das geeignet ist, das Entriegeln eines Schnappverschlusses (4) zu betätigen, der schwenkbar in Bezug auf den Kopf (3) des Balkens befestigt ist, und dass es auf einer Stange befestigt ist.

## Claims

1. A beam for a height-adjustable floor of a trailer, including a connector head (3) with a rail (8) provided for this purpose on the said trailer, having a series of air cells, corresponding to separate positions for the said rail, the said head (3) being mounted in a rotating position on a sliding insert (2) against a beam body, and bearing a retainer (31), able to slide in the said rail and a latch (4) which can be in two positions:
- a locked position, wherein it is engaged in one of the said air cells, to maintain the said immovable beam against the said rail (8); and
- an unlocked position, wherein it is extracted from the said air cell,
**characterised in that** the said head (3) includes maintenance means, maintaining the said latch (4) in an intermediary stable position, between the said locked position and the said unlocked position, when the said retainer (31) co-operates with the said rail (8), an intermediary position in which the said latch (4) is partially engaged in one of the air cells, the said maintenance means including a first counter spring (5), extending to return the said latch (4) in the said locked position, and a second counter spring (6), countering the said first counter spring (5), to maintain the said latch (4) in the said intermediary position, the said latch (4) being mounted, pivoting against the said head (3).

2. A beam, according to claim 1, **characterised in that** the said second counter spring (6) acts on a maintenance component (7) in the intermediary position presenting a piece (72), touching the said head (3).

3. A beam, according to claim 2, **characterised in that** the said component (7) presents a shoulder (71), touching the said latch (4).

4. A beam, according to any one of the claims 1 to 3, **characterised in that** the passage from the said intermediary position to the said locked position is ensured by the weight of the said beam and/or the floor load supported by the said beam.

5. A beam, according to claims 2 and 4, **characterised in that** the passage from the said intermediary position to the said locked position, leads to the compression of the said second counter spring (6).

6. A beam, according to any one of the claims 1 to 5, **characterised in that** the said retainer (31) is made from polyamide, POM or Teflon.

7. A beam, according to claim 6, **characterised in that** the said retainer (31) includes at least two sections (311, 312), that can be stacked with each other.

8. A beam, according to any one of the claims 6 and 7, **characterised in that** the said head can hold at least two separate retainers (31), presenting additional different profiles of at least two different rail (8) profiles.

9. A beam, according to any one of the claims 1 to 8, **characterised in that** the said latch (4) presents a fastening element (42), able to cooperate with a corresponding section of a tool, in a way to operate an unlocking mechanism remotely.

10. A tool (9) intended to be used to adjust the height of a beam, according to any one of the claims 1 to 9, sliding in a rail (8), **characterised in that** it presents a bolt section (91), able to be guided into the said rail with air cells, and a protruding element (92), able to operate the unlocking of a latch (4), mounted pivoting against the head (3) of the said beam, and **in that** it is mounted on a pole.
